Europäisches Patentamt

European Patent Office

Office européen des brevets

(11) Publication number: **0 227 620**
**A2**

(12)

# EUROPEAN PATENT APPLICATION

(21) Application number: **86850420.0**

(22) Date of filing: **04.12.86**

(51) Int. Cl.⁴: **B 23 B 31/30**
**B 23 B 31/00**

(30) Priority: **09.12.85 SE 8505791**

(43) Date of publication of application:
**01.07.87 Bulletin 87/27**

(84) Designated Contracting States:
**AT BE CH DE ES FR GB GR IT LI LU NL SE**

(71) Applicant: **Waco Jonsereds AB**
**Box 41**
**S-301 02 Halmstad (SE)**

(72) Inventor: **Andersson, Bengt Axel**
**Onsdagsgränd 8**
**S-302 53 Halmstad (SE)**

(74) Representative: **Lenz, Franz et al**
**AWAPATENT AB Box 5117**
**S-200 71 Malmö (SE)**

The title of the invention has been amended (Guidelines for Examination in the EPO, A-III. 7.3).

(54) **Tool holder with a locking device.**

(57) A device for preventing unintentional relative movement between a tool spindle (10) and a tool holder (11) or the like mounted thereon, comprising a sleeve-shaped member (12) fixedly connectible to the tool holder (11) or formed integrally therewith. said member having an opening (26) in which the tool spindle (10) is insertable. and at least one cavity (27) which is open towards the said opening (26) and in which a disk (28) having an arcuate periphery is eccentrically mounted by means of a pin (29) extending transversely of the plane of the disk. The disk (28) is rotatable between a first position in which the arcuate periphery engages the tool spindle (10) so that. when the spindle (10) and the tool holder (11) tend to move relative to the sleeve (10) connected therewith, the said arcuate periphery is tightened to engage the spindle (10) to an extent increasing with said movement, and a second position out of engagement with said spindle (10) so that the sleeve (12) and thus the tool holder (11) can be removed from the spindle. By inclining the rotatable disk (28) relative to the longitudinal axis of the tool spindle (10). relative movement in both the peripheral direction and in the axial direction may be prevented.

FIG.1

EP 0 227 620 A2

## Description

### A DEVICE FOR PREVENTING UNINTENTIONAL RELATIVE MOVEMENT BETWEEN A TOOL SPINDLE AND A TOOL HOLDER OR THE LIKE MOUNTED THEREON

The invention relates to a device for preventing unintentional relative movement between a tool spindle and a tool holder or the like mounted thereon.

For the last few years. the tools of woodworking machines have usually been mounted on their spindles by means of tool holders in the form of clamping sleeves to improve repeatability and reduce the down-time for tool change. The clamping sleeves are anchored in the center hole of the tool, and the sleeves with the tools mounted thereon are pushed onto the spindles and secured by supplying pressure medium to a space adjacent the inner wall of the sleeve opening, said inner wall thereby being urged inwardly to firmly engage that part of the spindle which lies in the sleeve opening. To remove the tool. a valve communicating with the said space is actuated. such that the pressure within the space is reduced or removed. the sleeve opening resumes its original size, and the tool can be withdrawn from the spindle. In a tool clamped in this manner, there is of course always a risk that the tool may become loose due to leakage of pressure medium and is thrown from the spindle. To eliminate this risk, a safety ring is bolted to the spindle end outside the tool. However, this means reducing to some extent one of the advantages obtainable by the use of circum-clamping sleeves, i.e. the rapid and efficient tool change.

It is the object of this invention to provide a device of an entirely new type to prevent the tool with the clamping sleeve from moving relative to the spindle. It must be possible to place the device in its active position while the tool is being mounted on the spindle, and no subsequent manipulation should be required. This object is achieved by means of a safety device which comprises a sleeve-shaped member connectible to the tool holder or formed integrally therewith. said member having an opening in which the spindle is insertable, and at least one cavity which is open towards the said opening and in which an element having an engagement surface facing the said opening is eccentrically mounted and rotatable under the action of a force between a first position in which said engagement surface engages the periphery of the spindle within said opening so that, when the tool holder with said sleeve-shaped member tends to move relative to the spindle, the said engagement surface is tightened to engage the peripheral surface of the spindle to an extent increasing with said relative movement which thus is counteracted, and a second position in which said engagement surface is at a distance from the spindle periphery so that the tool holder. after it has been loosened. can be removed together with said sleeve-shaped member.

The above-mentioned device eliminates the risk that the tool disengages itself from the spindle in the event of a pressure drop. Furthermore. it is possible. by arranging the said element with its engagement surface perpendicular the longitudinal axis of the spindle. to prevent both axial and peripheral movement of the tool with the clamping sleeve in relation to the spindle. whereby the risk that the sleeve may seize on the spindle is eliminated as well. Furthermore. the new design of the safety device opens up entirely new prospects of automatic tool change in woodworking machines.

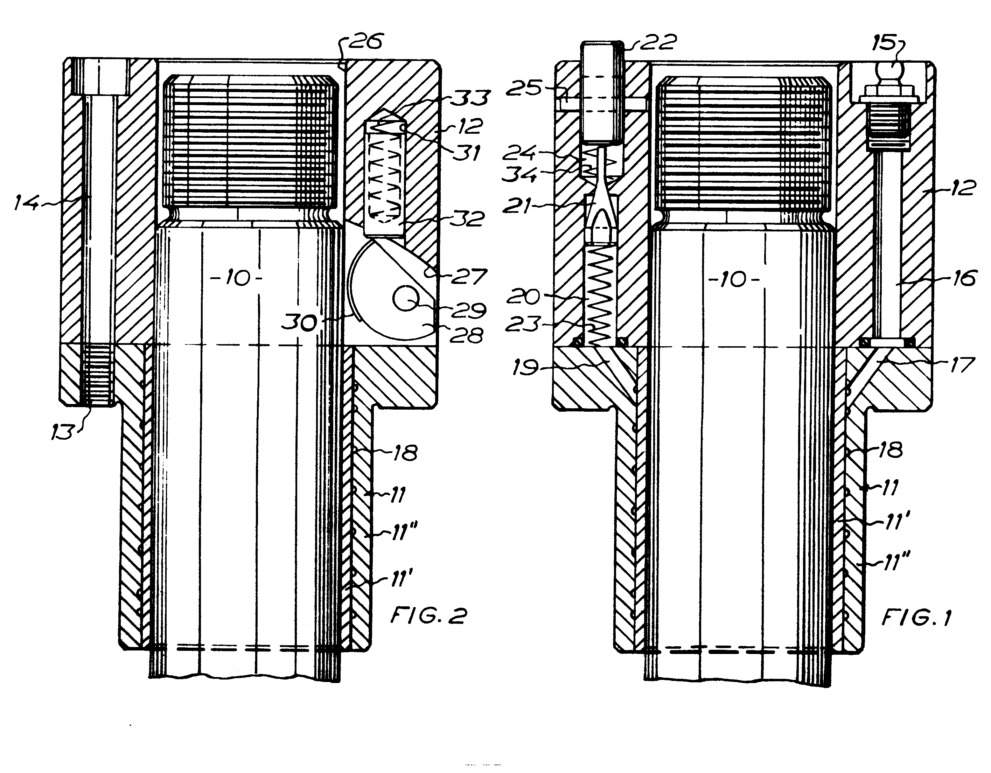

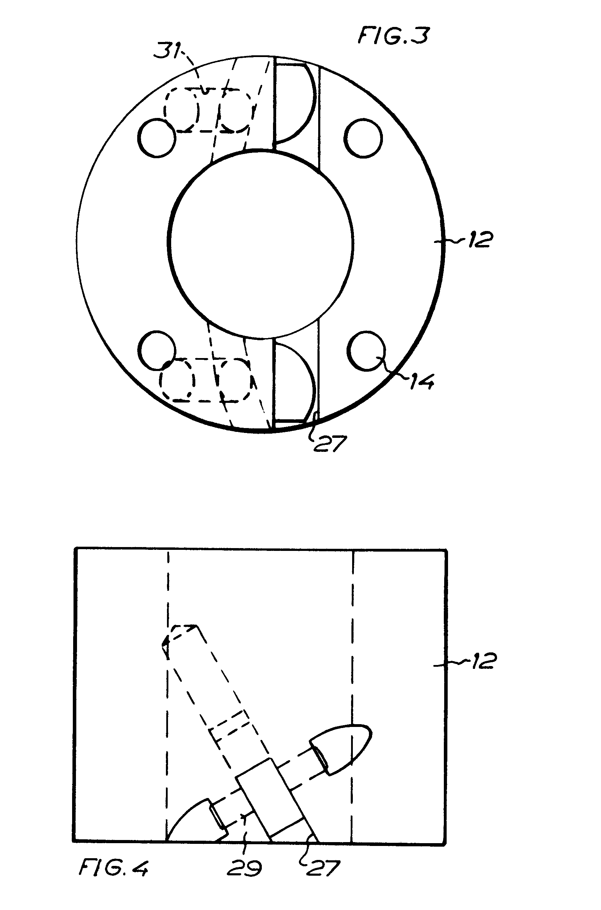

The invention will be described in more detail below, reference being had to the accompanying drawings illustrating an embodiment. Fig. 1 is an axial section of the device according to the invention which is mounted, together with a clamping sleeve, on a tool spindle. Fig. 2 is a different axial section of the device and the sleeve shown in Fig. 1. Fig. 3 illustrates the side of the device according to the invention facing the clamping sleeve. Fig. 4 illustrates the device as seen from the right-hand side in Fig. 1.

Fig. 1 shows a spindle 10 in a woodworking machine, a clamping sleeve 11 being mounted on said spindle. The clamping sleeve 11 carries a tool (not shown), for example a milling cutter, and consists of two parts, viz. an inner sleeve 11' and and outer sleeve 11" which has a flange at the end facing the spindle end. The sleeves 11', 11" tightly interconnected. for example by means of a circumferential weld at each end. In the surface facing the inner sleeve 11', the outer sleeve 11" has a spiral groove 18 communicating with an inlet channel 17 which extends obliquely through the sleeve flange, and an outlet channel 19 on the opposite side which also extends obliquely through the sleeve flange. A pressure medium supplied to the inlet channel 17 flows through the spiral groove 18, and if the outlet channel 19 is closed. the inner sleeve 11' is actuated by this pressure. If the pressure is high. the inner sleeve 11' is urged into tight engagement with the peripheral surface of the spindle 10. As has been mentioned by way of introduction. this is at the present time a well-known technique of securing a tool on a tool spindle.

A locking sleeve 12 coaxial with the clamping sleeve 11 is mounted on the flange of the outer sleeve 11'. the end face of said locking sleeve engaging the flange surface facing the end of the spindle 10. The flange and the locking sleeve have the same outer diameter and may be formed in one piece or interconnected by means of a circumferential weld, or by means of bolts extending through axial bores 14 in the locking sleeve 12 and into threaded bores 13 in the flange, as indicated in Fig. 2. In its outwardly facing end face. the locking sleeve 12 has a recess with a pressure medium nipple 15 communicating, via a throughbore 16 in the sleeve wall. with the pressure medium supply channel 17 in the flange of the outer sleeve 11". A corresponding axial bore 20 in the locking sleeve 12 communicates with the outlet channel 19. and in this bore 20 a check valve member 21 is provided which is urged into engagement with a conical seat by means of a compression spring 23. In the direction towards the outwardly facing end of the locking sleeve 12. the seat merges into a bore 24 in which a pin 22 projecting from the end face is axially movable. The pin 22 is held in position by means of a cross pin 25 extending through an elongate recess in the pin 22. The pin 22 is urged outwardly by means of a spring 34. The valve member 22 has an actuating member which extends upwardly through the valve seat and whose end lies adjacent the inwardly facing end of the pin 22 when the latter is in its extended position, as shown in Fig. 1. It will be evident that. when the pin 22 is urged inwardly against the action of the spring 34, the valve member 21 is actuated against the action of the spring 23 to disengage from its seat, and a communication is established from the outlet channel 19 of the clamping sleeve 11 via the channel 20 and the seat to the bore 24 which has its part adjacent the seat communicating with the atmosphere, for example by means of a channel which is not shown in the drawings and opens into the peripheral or outwardly facing end face of the locking sleeve. The two sleeves 11, 12 are movable with their central openings on the spindle 10 with a suitable fit, and it appears that, when the two sleeves are positioned in the manner shown in Figs. 1 and 2 and the spiral groove 18 has been supplied with pressure medium via the nipple 15, the clamping sleeve 11 engages the spindle 10 with considerable force so that the tool on the clamping sleeve will be firmly held in position on the spindle.

If the pressure in the spiral groove 18 is reduced or drops completely due to leakage, it is necessary, as has been pointed out before, to provide a locking device which prevents the tool and the clamping sleeve from being thrown off the spindle 10. To this end, the locking sleeve 12 is formed with two slits 27 which extend from the end of the locking sleeve 12 facing the clamping sleeve 11 and extend through the wall of the sleeve 12 and which, according to Fig. 2, have a length slightly less than half the length of the sleeve 12. Each slit accommodates a disk 28 which is semicircular, except that one corner has been cut away. The disk 28 is eccentrically mounted in the slit 27 by means of a bearing pin 29. It will be evident that the disk 28, because of its eccentric mounting, tends to swing counterclockwise in Fig. 2. such that the cut-away portion of the disk 28 is swung outwardly from the outer periphery of the sleeve 12. while the opposite side of the disk is swung outwardly from the inner periphery of the sleeve or, in case a spindle 12 is mounted in the sleeve, into engagement with the sleeve periphery, as will appear from Fig. 2. The portion of the disk 28 which faces the inner periphery is provided on its periphery with a coating 30 to increase friction.

The slit 27 may extend axially in the wall of the sleeve 12, in which case the disk 28 and its arcuate engagement surface engaging the friction coating 30 extends parallel to the axis of the spindle 10. The position of the disk 28 shown in Fig. 2. where the arcuate engagement surface with the friction coating 30 is spaced from the periphery of the spindle 10. presupposes that a radial pressure directed towards the spindle 10 is exerted on the cut-away corner on the disk 28. for example by means of a tool (not shown). The disk 28 will assume this position when the two sleeves are mounted on or removed from the spindle 10. If the pressure on the disk 28 is removed, the disk 28 swings counterclockwise. and the cut-away corner protrudes slightly from the outer periphery of the sleeve 12, while the arcuate engagement surface with the friction coating 30 will engage the peripheral surface of the spindle 10. If. due to a pressure drop, the clamping sleeve 11 with the tool begins to move outwardly on the spindle 10, the arcuate engagement surface with friction coating 30 will. because of the eccentric mounting of the disk 28, be further rotated counterclockwise, but since the distance to the center of its bearing pin 29 then increases, also the engagement of the disk 28 with the spindle periphery will increase, and after a short while the frictional clamping engagement will be so strong that the movement is stopped. To ensure engagement of the disk 28 with the spindle 10, a pin 32 mounted in a bore 31 is adapted to actuate the disk by means of a spring 33 which is positioned in a central longitudinal bore in the pin 32 and projects therefrom in order to engage with its protruding end the bottom of the bore 31. The pin 31 exerts, by means of the spring 33. a force which strives to swing the disk 28 counterclockwise into engagement with the spindle periphery. When the tool is to be loosened and the disk 28 is to be swung clockwise by exerting an external force on its cut-away corner protruding from the outer sleeve periphery, the pin 32 is urged by means of the opposite corner portion of the disk 28 into its bore 31, as shown in Fig. 2.

If a disk 28 is placed in parallel with the axis of the spindle 10, as has been assumed above. outward movement of the sleeves 11, 12 with the tool on the spindle 10 is prevented. If it is also desired to prevent peripheral movement in one direction, a further disk 28 must be mounted which in that case must be perpendicular to the axis of the spindle 10. Although this may be suitable in some cases, the slits 27 preferably are arranged such that they form a suitable angle. for example 45°. with the longitudinal axis of the spindle 10, and it will then be realised that the disk 28, because of its engagement with the periphery of the spindle 10. is capable of preventing both an axial relative movement between the sleeves 11. 12 and the spindle 10 and a peripheral movement in one direction therebetween. If, in addition, two disks 28 are placed each in one slit 27 in the manner indicated in Figs. 3 and 4, with the disks 28 parallel to one another, relative movement in the opposite peripheral directions may be prevented.

In Figs. 3 and 4. the locking sleeve 12 has two oblique slits 27. each adapted to receive a disk 28. However, it is of course also possible to provide further slits 27 with disks 28, if this is necessary, and the angle shown in Fig. 4 may be different from the one illustrated. The invention may thus be modified in many different ways and adapted to all cases where a safety arrangement is required to prevent unintentional relative movement between a tool spindle and a tool holder which is mounted thereon

and which is of the type described above and illustrated in the drawings. or a different type of tool holder.

## Claims

1. Device for preventing unintentional relative movement between a tool spindle (10) and a tool holder (11) or the like mounted thereon. **characterised** by a sleeve-shaped member (12) connectible to the tool holder (11) or formed integrally therewith. said member having an opening (26) in which the spindle (10) is insertable, and at least one cavity (27) which is open towards the said opening (26) and in which an element (28) having an engagement surface facing the said opening is eccentrically mounted and rotatable under the action of a force between a first position in which said engagement surface engages the periphery of the spindle (10) within said opening (26) so that. when the tool holder (11) with said sleeve-shaped member (12) tends to move relative to the spindle (10). the said engagement surface is tightened to engage the peripheral surface of the spindle (10) to an extent increasing with said relative movement which thus is counteracted. and a second position in which said engagement surface is at a distance from the spindle (10) periphery so that the tool holder (11), after it has been loosened, can be removed together with said sleeve-shaped member (12).

2. A device as claimed in claim 1, **characterised** in that the engagement surface of the element (28) is arcuate and rotatable in a plane forming an acute angle with the longitudinal axis on the tool spindle (10) to counteract any tendency to both axial and peripheral relative movement between said spindle (10) and said tool holder (11).

3. A device as claimed in claim 1 or 2, in which two elements are disposed each and one recess (27) which are approximately diametrically opposite in said sleeve-shaped member (12). **character ised** in that the plane of rotation of the engagement surface of one element (28) coincides with or extends parallel to the plane of rotation of the arcuate engagement surface on the other element (28).

4. A device as claimed in claim 2 or 3. **characterised** in that said element (28) is in the form of a disk which is mounted by means of a pin (29) extending transversely of the plane of the disk and which forms. with part of its periphery. said arcuate engagement surface.

5. A device as claimed in any one of the preceding claims. **characterised** in that the cavity of the sleeve-shaped member (12) intersects the outer periphery of the member to form an opening from which a portion of the element (28) projects when said element is in the first position. to actuate said element (28) into the second position by external means.

6. A device as claimed in any one of the preceding claims. **characterised** in that said element (28) is spring-biased (at 33) toward said first position.

7. A device as claimed in any one of the preceding claims. **characterised** in that the engagement surface has a coating (30) to increase friction.

0227620

FIG.1

FIG.2

0227620

FIG.3

31

12

14

27

FIG.4    29    27

12